# EUROPEAN PATENT APPLICATION

(11) **EP 4 578 909 A1**
(43) Date of publication of application: **02.07.2025**
(21) Application number: 23856895.0
(22) Date of filing: 20.04.2023
(51) Int. Cl.: C08L 23/10, C08L 23/16, C08L 23/18, H01B 9/00, H01B 7/02

(54) **RESIN COMPOSITION AND POWER CABLE**

(30) Priority: 26.08.2022 JP 2022134932
(71) Applicant: SUMITOMO ELECTRIC INDUSTRIES, LTD., Osaka-shi, Osaka 541-0041 (JP)
(72) Inventor: YAMASAKI, Satoshi, Osaka-shi, Osaka 541-0041 (JP)
(74) Representative: Grünecker Patent- und Rechtsanwälte PartG mbB
(86) International application number: PCT/JP2023/015740
(87) International publication number: WO 2024/042775

(57) **Abstract**

A resin composition containing a propylene-based resin and at least one selected from the group of a rubber material and an elastomer, the rubber material and the elastomer each including at least two units from among ethylene, propylene, butylene, hexene, isoprene, octene, and styrene, the resin composition having a viscosity of 200 Pa·s or more and 5000 Pa·s or less at a high shear rate with a shear rate of 100 s⁻¹ at a temperature of 190°C, and a viscosity of 7000 Pa·s or more and 50000 Pa·s or less at a low shear rate with a shear rate of 1 s⁻¹ at a temperature of 190°C, the resin composition having an elastic modulus of 150 MPa or more and 700 MPa or less.

## Description

### [Technical Field]

The present application claims priority to Japanese Patent Application No. 2022-134932 filed on August 26, 2022, the entire disclosure of which is incorporated herein by reference.

The present disclosure relates to a resin composition and a power cable.

### [Background Art]

Crosslinked polyethylene has been widely used as a resin component making up an insulating layer in power cables and the like because of its excellent insulation properties (for example, PTL 1).

### [Citation List]

### [Patent Literature]

PTL 1: Japanese Patent Application Laid-Open No. S57-69611

### [Summary of Invention]

According to an aspect of the present disclosure, there is provided
a resin composition including
a propylene-based resin, and
at least one selected from the group of a rubber material and an elastomer,
wherein the rubber material and the elastomer each includes at least two units from among ethylene, propylene, butylene, hexene, isoprene, octene, and styrene,
the resin composition has a viscosity of 200 Pa·s or more and 5000 Pa·s or less at a high shear rate with a shear rate of 100 s⁻¹ at a temperature of 190°C, and a viscosity of 7000 Pa·s or more and 50000 Pa·s or less at a low shear rate with a shear rate of 1 s⁻¹ at a temperature of 190°C, and
the resin composition has an elastic modulus of 150 MPa or more and 700 MPa or less.

### [Brief Description of Drawing]

[FIG. 1]

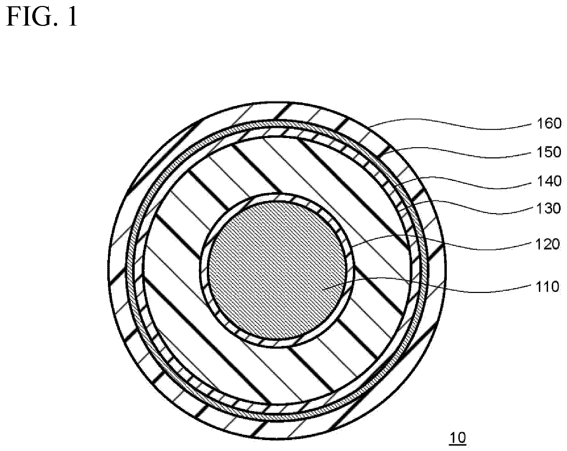

FIG. 1 is a schematic cross-sectional view perpendicular to the axial direction of a DC power cable according to an embodiment of the present disclosure.

### [Description of Embodiments]

### [Problem to be Solved by the Disclosure]

In the past, crosslinked polyethylene that has degraded over time could not be recycled and could only be incinerated, raising concerns about its impact on the environment.

Therefore, in recent years, a resin containing propylene (hereinafter, also referred to as "propylene-based resin") has attracted attention as a resin component making up an insulating layer. Even when a propylene-based resin is non-crosslinked, the insulation properties required for a power cable can be satisfied. That is, both insulation properties and recyclability can be achieved. Furthermore, the use of a propylene-based resin can improve handleability, processability, and ease of manufacture.

However, when the inventors of the present disclosure conducted studies using a propylene-based resin as a resin component making up an insulating layer, they found that the outer diameter of the insulating layer tends to be non-uniform in the cross section and the longitudinal direction of the power cable. This is because the resin component sags due to its own weight before the molten resin component is cooled after being extruded as an insulating layer, and a desired shape cannot be maintained or fixed.

An objective of the present disclosure is to provide a technique for improving uniformity of the outer diameter of a power cable when a resin composition containing a propylene-based resin is used.

### [Advantageous Effect of the Disclosure]

According to the present disclosure, uniformity of the outer diameter of a power cable can be improved when a resin composition containing a propylene-based resin is used.

### <Description of the Embodiments of the Disclosure>

### [Findings Obtained by the Inventors]

First, findings obtained by the inventors will be briefly described.

Non-uniformity of the outer diameter due to the sagging of a resin component described above occurs more conspicuously with propylene-based resins than crosslinked polyethylene.

In the case where the insulating layer is formed from crosslinked polyethylene, a resin component containing polyethylene and a crosslinking agent is extruded as an insulating layer, and then, for example, a cable is introduced into a crosslinking tube and the resin component is heated under a high-temperature environment to be crosslinked. After the crosslinking, the cable is introduced into, for example, a cooling tank to cool the insulating layer, etc. In this case, since the viscosity of the resin component increases in the crosslinking process, the shape of the insulating layer can be easily maintained, and the shape can be fixed by cooling. In other words, by virtue of the crosslinking it is possible to limit sagging of the resin component and associated variation in the outer diameter of the power cable.

Meanwhile, in the case where the insulating layer is formed from a propylene-based resin, since no crosslinking treatment is performed, the resin component is subjected to cooling after being extruded. At this time, the insulating layer is cooled gradually from the surface side toward the inside. Therefore, the insulating layer may be in a condition such that while the shape of the surface side of the insulating layer is fixed by cooling, the inside of the insulating layer is still molten at a high temperature and is fluid. Moreover, since no crosslinking treatment is performed, the viscosity of the resin component cannot be increased. As a result, the resin component making up the insulating layer may sag due to its own weight before the inside of the insulating layer is cooled and the shape thereof is fixed. With this sagging, the thickness of the insulating layer may become non-uniform in the outer peripheral direction in the cross section of the power cable, and the thickness of the insulating layer may also become non-uniform in the longitudinal direction of the power cable. For example, when the power cable is conveyed in the horizontal direction by a horizontal extruder, the resin component may easily sag downward in the cross section of the power cable, whereas when the power cable is conveyed in the vertical direction by a vertical extruder, the resin component may easily sag downward in the longitudinal direction of the power cable. When the thickness of the insulating layer becomes non-uniform in the outer peripheral direction in the cross section or the longitudinal direction, there may be a portion where the insulating property is locally lower and a desired insulating property cannot be achieved in some cases.

Sagging of the resin component occurs more conspicuously as the thickness of the insulating layer increases and as the ratio of the thickness of the insulating layer to the outer diameter of the conductor increases, so that the uniformity of the outer diameter of the power cable is more likely to decrease.

In order to solve the above-described problems, the inventors focused on the viscosity of a resin composition containing a propylene-based resin when the resin composition is molten, and conducted their studies.

In general, the viscosity of a resin component largely varies depending on the shear rate, and tends to be low at a high shear rate and high at a low shear rate. In the production of power cables, the shear rate tends to be high and the viscosity of the resin composition tends to be low at the stage of melt-kneading and extruding the resin composition. On the other hand, the shear rate tends to be low and the viscosity of the resin composition tends to be high at the stage from after the extrusion of the resin composition to the cooling.

In view of the above, the inventors studied the viscosities of the resin composition respectively at the high shear rate and the low shear rate and found that, by configuring the resin composition so that each of these viscosities falls within a predetermined range, it is possible to achieve extrudability while also limiting the sagging before the shape is fixed by cooling. The inventors found that with such a resin composition, uniformity of the outer diameter of a power cable can be improved.

In addition, from the viewpoint of satisfying a predetermined insulating property that is required for the power cable, the inventors found that the elastic modulus of the resin composition is preferably adjusted to a predetermined range together with the viscosity at each shear rate described above.

The present disclosure has been achieved based on the above findings.

### [Embodiments of Disclosure]

Next, an embodiment of the present disclosure will be described.

[1] A resin composition according to one aspect of the present disclosure includes
   a propylene-based resin, and
   at least one selected from the group of a rubber material and an elastomer
      wherein the rubber material and the elastomer each includes at least two units from among ethylene, propylene, butylene, hexene, isoprene, octene, and styrene,
   the resin composition has a viscosity of 200 Pa·s or more and 5000 Pa·s or less at a high shear rate with a shear rate of 100 s⁻¹ at a temperature of 190°C, and a viscosity of 7000 Pa·s or more and 50000 Pa·s or less at a low shear rate with a shear rate of 1 s⁻¹ at a temperature of 190°C, and
   the resin composition has an elastic modulus of 150 MPa or more and 700 MPa or less.
   According to this configuration, the resin composition can be stably extruded with a uniform thickness, and shape deformation in a molten state can be limited.
[2] A power cable according to another aspect of the present disclosure includes
   a conductor and
   an insulating layer coated on an outer periphery of the conductor and formed from a resin composition,
   the resin composition including
   a propylene-based resin and
   at least one selected from the group of a rubber material and an elastomer,
   the rubber material and the elastomer each including at least two units from among ethylene, propylene, butylene, hexene, isoprene, octene, and styrene,
   the resin composition having a viscosity of 200 Pa·s or more and 5000 Pa·s or less at a high shear rate with a shear rate of 100 s⁻¹ at a temperature of 190°C, and a viscosity of 7000 Pa·s or more and 50000 Pa·s or less at a low shear rate with a shear rate of 1 s⁻¹ at a temperature of 190°C,
      the resin composition having an elastic modulus of 150 MPa or more and 700 MPa or less.
   According to this configuration, it is possible to limit variation in the outer diameter in each of the outer peripheral direction in the cross section of the power cable and the longitudinal direction thereof.
[3] In the power cable according to the above-described [2], the enthalpy of fusion of the resin composition is 60 J/g or more and 100 J/g or less.
   According to this configuration, it is possible to more reliably limit variation in the outer diameter.
[4] In the power cable according to the above-described [2] or [3],
   the melting point of the resin composition is 140°C or higher and 150°C or lower.
   According to this configuration, it is possible to more reliably limit variation in the outer diameter.
[5] In the power cable according to any one of the above-described [2] to [4],
   the propylene-based resin has a viscosity of 100 Pa·s or more and 6000 Pa·s or less at the high shear rate, and a viscosity of 500 Pa·s to 50000 Pa·s or less at the low shear rate.
   According to this configuration, it is possible to more reliably limit variation in the outer diameter.
[6] In the power cable according to any one of the above-described [2] to [5],
   the rubber material and the elastomer each has a viscosity of 300 Pa·s or more and 7000 Pa·s or less at the high shear rate, and a viscosity of 4000 Pa·s or more and 80000 Pa·s or less at the low shear rate.
   According to this configuration, it is possible to more reliably limit variation in the outer diameter.
[7] In the power cable according to any one of the above-described [2] to [6],
   in a cross section of the power cable perpendicular to a longitudinal direction of the power cable, a ratio of the major axis to the minor axis is 1.3 or less.
   According to this configuration, it is possible to more reliably limit variation in the outer diameter.
[8] In the power cable according to any one of the above-described [2] to [7],
   in cross sections of the power cable taken at two points spaced apart in a longitudinal direction of the power cable, a ratio of the major axis at one of the two points to the minor axis at the other one of the two points is 1.3 or less.
   According to this configuration, it is possible to more reliably limit variation in the outer diameter.
[9] In the power cable according to any one of the above-described [2] to [8],
   the thickness of the insulating layer is 4 mm or more, and a ratio of the outer diameter of the power cable to the outer diameter of the conductor is 4 or less.

According to this configuration, even when the insulating layer is formed thick, it is possible to more reliably limit variation in the outer diameter.

### [Details of Embodiment of the Disclosure]

An embodiment of the present disclosure will now be described with reference to drawing. It should be noted that the present disclosure is not limited to the following examples but is defined by the scope of the claims and all modifications within the meaning and scope equivalent to the scope of the claims are intended to be included.

### [Embodiment of the Disclosure]

### (1) Resin Composition

The resin composition of the present embodiment contains a propylene-based resin and at least one selected from the group of a rubber material and an elastomer, and the elastic modulus and the viscosities of the resin composition at a high shear rate and a low shear rate are adjusted to be in predetermined ranges by mixing these components. Specifically, as the viscosity of the resin composition, the viscosity at a high shear rate with a shear rate of 100 s⁻¹ at a temperature of 190°C is 200 Pa·s or more and 5000 Pa·s or less, and the viscosity at a low shear rate with a shear rate of 1 s⁻¹ at a temperature of 190°C is 7000 Pa·s or more and 50000 Pa·s or less. In addition, the elastic modulus of the resin composition is 150 MPa or more and 700 MPa or less.

Hereinafter, the constituents of the resin composition, its make-up, and the physical properties of the resin composition such as a viscosity and elastic modulus will be described in detail.

### (1-1) Propylene-based Resin

The propylene-based resin is a base polymer of the resin composition. Examples of the propylene-based resin include a propylene homopolymer (hereinafter, also referred to as homo-PP) and a propylene random polymer (hereinafter, also referred to as random-PP). The homo-PP has a propylene unit and the random-PP has a propylene unit and ethylene unit. From the viewpoint of obtaining higher insulating property in the insulating layer, the propylene-based resin may be a random-PP. Since the random-PP contains an ethylene unit, although the amount of crystals is lower than that of the homo-PP, coarse crystals are not likely to be generated during cooling, and it is possible to limit a decrease in insulating property due to cracking caused by the coarse crystals. That is, the random-PP can provide a higher insulating property than the homo-PP.

The content of the ethylene unit in the random-PP is preferably, for example, 0.5% by mass or more and 15% by mass or less. When the content of the ethylene unit is 0.5% by mass or more, generation of coarse crystals can be more easily limited, and high insulation properties can be maintained. On the other hand, when the content of the ethylene unit is 15% by mass or less, it is possible to limit a decrease in the melting point and stably realize use in a non-crosslinked state or a micro-crosslinked state.

Examples of the stereoregularity of the propylene-based resin include isotactic, syndiotactic, and atactic. The stereoregularity is not particularly limited, but may be isotactic. When the stereoregularity is isotactic, a decrease in the melting point of the resin composition can be limited. As a result, it is possible to stably realize use in a non-crosslinking state or a micro-crosslinking state.

The viscosities of the propylene-based resin at a high shear rate and a low shear rate are not particularly limited. The viscosity at a high shear rate may be 100 Pa·s or more and 6000 Pa·s or less. The viscosity at a low shear rate may be 500 Pa·s or more and 50000 Pa·s or less. By having such a viscosity, the viscosity of the resin composition can be easily adjusted to a predetermined viscosity. By setting the viscosities of the propylene-based resin, which is the base polymer of the resin composition, to the above-described ranges, when the resin composition is prepared by mixing with an elastomer or the like, each viscosity in the resin composition can be more reliably adjusted to the above-described ranges.

As the propylene-based resin, one kind of propylene-based resin having a viscosity within a predetermined range at a high shear rate and/or a low shear rate may be used singly, or two or more kinds of propylene-based resins having different viscosities may be used in combination. From the viewpoint of adjusting the viscosity of the resin composition to a predetermined range, two or more kinds may be used in combination.

The elastic modulus of the propylene-based resin is preferably 600 MPa or more and 1200 MPa or less from the viewpoint of adjusting the elastic modulus of the resin composition to a predetermined range. The elastic modulus herein indicates a storage elastic modulus at 25°C measured by dynamic mechanical analysis (DMA). Specifically, the storage elastic modulus of the target resin sample is measured while the temperature is raised from -50°C to 100°C in a state in which expansion and contraction of 0.08% (a state in which expansion and contraction vibration having an amplitude of 0.08% is applied) is applied to the resin sample. At this time, the measurement frequency is 10 Hz. The rate of temperature increase is 10°C/min. Then, the storage elastic modulus at 25°C is determined.

As will be described later, a resin component such as a propylene-based resin has a viscosity curve that varies depending on physical properties such as a melting point, enthalpy of fusion, and molecular weight. In the present embodiment, from the viewpoint of adjusting the viscosity of the resin composition to a predetermined range, the physical properties of the propylene-based resin can be set as follows.

The melting point of the propylene-based resin is not particularly limited, but may be 160°C or higher and 175°C or lower in the case of a propylene homopolymer (homo-PP), and may be 140°C or higher and 150°C or lower in the case of a propylene random polymer (random-PP). According to such a propylene-based resin, the viscosity of the resin composition can be easily adjusted to a predetermined range. Moreover, the melting point of the resin composition can be increased to raise the heat-resistant temperature of the insulating layer. Thus, even when the insulating layer is non-crosslinked, a high insulating property can be stably maintained in a high-temperature environment.

The enthalpy of fusion of the propylene-based resin is not particularly limited, but may be 100 J/g or more and 120 J/g or less in the case of homo-PP, or may be 90 J/g or more and 105 J/g or less in the case of random-PP. According to such a propylene-based resin, the viscosity of the resin composition can be easily adjusted to a predetermined range, and the heat-resistant temperature of the insulating layer can be raised to stably maintain high insulating property of the insulating layer in a high-temperature environment.

In the present description, the melting point and the enthalpy of fusion are measured as follows. First, the sample is subjected to differential scanning calorimetry (DSC) in accordance with, for example, JIS-K-7121 (1987). Specifically, in a DSC apparatus, the temperature is raised from room temperature (ambient temperature, for example, 27°C) to 220°C at 10°C/min. Thus, a DSC curve is obtained by plotting the endothermic heat amount (heat flow) per unit time with respect to temperature. Here, the temperature at which the endothermic heat amount per unit time in the sample becomes the maximum (peak) is defined as a "melting point (melting peak temperature)". In addition, it is assumed that the endothermic heat of the sample is absorbed entirely by the resin component, and a value (J/g) obtained by dividing the endothermic heat amount (J) of the sample from room temperature to 220°C by the mass (g) of the entire resin component in the sample is defined as an "enthalpy of fusion". The crystallinity (%) of the sample can be determined based on the enthalpy of fusion of the sample and the theoretical enthalpy of fusion of the complete crystal.

The propylene-based resin has a predetermined molecular weight distribution, and as the width of the molecular weight distribution increases, that is, as the ratio between the weight average molecular weight (Mw) and the number average molecular weight (Mn) in the molecular weight distribution increases, the difference between the viscosity at a high shear rate and the viscosity at a low shear rate tends to increase. From the viewpoint of satisfying the viscosity of the propylene-based resin at each shear rate within the above-described range, Mw/Mn may be 3.0 or more and 8.0 or less, or may be 3.5 or more and 7.0 or less. The number average molecular weight Mn may be, for example, 60000 or more and 150000 or less. The weight average molecular weight Mw may be, for example, 210000 or more and 1000000 or less.

### (1-2) Rubber Material and Elastomer

The rubber material or the elastomer controls crystal growth of the propylene-based resin in the resin composition, and imparts flexibility to the insulating layer. The rubber material or the elastomer may cause variation in the viscosity of the resin composition at each shear rate by mixing with the propylene-based resin, but by mixing the rubber material or the elastomer to fall within a predetermined viscosity range, it is possible to impart predetermined flexibility to the insulating layer. The rubber material or the elastomer of the present embodiment includes at least two of ethylene, propylene, butene, hexene, isoprene, octene and styrene.

The viscosities of the rubber material or the elastomer at a high shear rate and a low shear rate are not particularly limited. The viscosity at a high shear rate may be 300 Pa·s or more and 7000 Pa·s or less. The viscosity at a low shear rate may be 4000 Pa·s or more and 80000 Pa·s or less. Alternatively, the viscosity of the rubber material at a high shear rate may be 500 Pa·s or more and 5000 Pa·s or less, and the viscosity at a low shear rate may be 10000 Pa·s or more and 70000 Pa·s or less. The viscosity of the elastomer at a high shear rate may be 1000 Pa·s or more and 6000 Pa·s or less, and the viscosity thereof at a low shear rate may be 5000 Pa·s or more and 50000 Pa·s or less. According to the rubber material or the elastomer having such viscosities, each viscosity of the resin composition can be easily adjusted to a desired range when same is mixed with the propylene-based resin.

The melting point of the rubber material or the elastomer is not particularly limited. The rubber material generally does not have a melting point because a peak of an endothermic heat amount is not detected by DSC measurement. The elastomer may not have a melting point, or if it has a melting point, may have a melting point of 100°C or lower.

The enthalpy of fusion of the rubber material or the elastomer is not particularly limited. The enthalpy of fusion of the rubber material is none because the melting point thereof cannot be measured. The enthalpy of fusion of the elastomer may be 50 J/g or less, or 30 J/g or less.

The elastic modulus (25°C) of the rubber material or the elastomer is not particularly limited, but may be 1 MPa or more and 200 MPa or less from the viewpoint of adjusting the elastic modulus of the resin composition to a predetermined range. The elastic modulus of the rubber material or the elastomer may greatly vary depending on the presence or absence of styrene. Specifically, in the case of containing no styrene, the elastic modulus tends to increase as the molecular weight increases, and in the case of containing styrene, the elastic modulus tends to decrease as the molecular weight increases.

Similarly to the propylene-based resin, the molecular weight distribution of the rubber material or the elastomer may vary the viscosity at each shear rate. From the viewpoint of satisfying the viscosity range at each shear rate in the rubber material or the elastomer, Mw/Mn may be 1.0 or more and 3.0 or less, or may be 1.0 or more and 2.5 or less. The number average molecular weight Mn may be, for example, 70000 or more and 250000 or less. The weight average molecular weight Mw may be, for example, 70000 or more and 600000 or less.

Specifically, as the rubber material, a copolymer obtained by copolymerizing at least any two of ethylene, propylene, butene, hexene, and octene may be used.

The rubber material may be a copolymer containing propylene from the viewpoint of compatibility with the propylene-based resin. As the copolymer containing propylene, for example, ethylene propylene rubber (EPR) can be used.

The ethylene content of the EPR may be, for example, 20% by mass or more, 40% by mass or more, or 55% by mass or more. When the ethylene content is less than 20% by mass, crystallization of the propylene-based resin cannot be sufficiently controlled, and the insulating property may deteriorate. On the other hand, when the ethylene content is 20% by mass or more, the crystallization of the propylene-based resin by EPR can be sufficiently controlled while obtaining the effect produced by EPR to impart flexibility. As a result, a decrease in insulating property can be limited. Further, the ethylene content may be 40% by mass or more, and may be 55% by mass or more. Accordingly, crystallization can be controlled more stably and a decrease in insulation properties can be stably limited.

The rubber material may be, for example, a copolymer containing no propylene. As the copolymer containing no propylene, for example, from the viewpoint of availability, very low density polyethylene (VLDPE) or the like can be used. Examples of the VLDPE include PE composed of ethylene and 1-butene and PE composed of ethylene and 1-octene. According to the copolymer containing no propylene, crystallization of the propylene-based resin can be stably controlled. The density of VLDPE is, for example, 0.855 g/cm³ or more and 0.890 g/cm³ or less.

As the elastomer, for example, a styrene-based thermoplastic elastomer containing styrene as a hard segment and at least one of ethylene, propylene, butene, isoprene, and the like as a soft segment can be used. Similarly to the rubber material, the styrene-based thermoplastic elastomer is a component that is dispersed in the resin composition to control crystal growth of the propylene-based resin, impart flexibility to the insulating layer, and contribute to adjustment of each viscosity of the resin composition. Further, the styrene-based thermoplastic elastomer forms a stable resonance structure by trapping electrons by an aromatic ring, or limits the occurrence of mechanical stress cracking in the insulating layer as an elastomer, thereby contributing also to the improvement of the water tree resistance of the insulating layer.

Examples of the styrene-based thermoplastic elastomer include a styrene-butadiene-styrene block copolymer (SBS), hydrogenated styrene-butadiene-styrene block copolymer, styrene-isoprene-styrene copolymer (SIS), hydrogenated styrene-isoprene-styrene copolymer, hydrogenated styrene butadiene rubber, hydrogenated styrene isoprene rubber, and styrene ethylene butylene olefin crystal block copolymer. Two or more of these may be used in combination.

The term "hydrogenated" as used herein means that hydrogen is added to a double bond. For example, the term "hydrogenated styrene-butadiene-styrene block copolymer" means a polymer obtained by adding hydrogen to a double bond of a styrene-butadiene-styrene block copolymer. Note that no hydrogen is added to the double bond of the aromatic ring of styrene. The "hydrogenated styrene-butadiene-styrene block copolymer" can be also referred to as a styrene-ethylene-butylene-styrene block copolymer (SEBS).

The styrene-based thermoplastic elastomer may have no double bond in its chemical structure. When a material having a double bond is used, the resin component may be thermally degraded, e.g., during molding of the resin composition, and the characteristics of the obtained insulating layer may be degraded. In this regard, a material having no double bond has high resistance to thermal degradation, so that the characteristics of the insulating layer can be maintained higher.

The styrene content in the styrene-based thermoplastic elastomer is not particularly limited, but may be 5% by mass or more and 35% by mass or less from the viewpoint of controlling crystal growth of the propylene-based resin and improved flexibility of the insulating layer.

### (1-3) Other Additives

In addition to the resin components described above, the resin composition may contain, for example, an antioxidant, a copper inhibitor, a lubricant, and a colorant.

Note that the resin composition may contain, for example, a small amount of an additive that functions as a nucleating agent that generates crystals of propylene, or may not substantially contain such an additive. Specifically, the content of the additive functioning as the nucleating agent may be less than 1 part by mass or may be 0 parts by mass, for example, when the total amount of the resin component including the propylene-based resin and at least one selected from the group of the rubber material and the elastomer is 100 parts by mass. Accordingly, the occurrence of unexpected abnormal crystallization caused by the nucleating agent can be limited, and the crystal amount can be easily controlled.

The resin composition may contain an inorganic filler, but from the viewpoint of adjusting the viscosities at a high shear rate and a low shear rate to predetermined ranges, the amount of addition may be small or may be zero.

### (1-4) Viscosity of Resin Composition

The resin composition is formed by mixing the above-described propylene-based resin and at least one selected from the group of a rubber material and an elastomer, and by mixing these components, the viscosity of the resin composition at a high shear rate with a shear rate of 100 s⁻¹ at a temperature of 190°C is 200 Pa·s or more and 5000 Pa·s or less, and the viscosity at a low shear rate with a shear rate of 1 s⁻¹ at a temperature of 190°C is 7000 Pa·s or more and 50000 Pa·s or less.

The propylene-based resin, the rubber material, and the elastomer each have a unique viscosity curve. The viscosity curve is a declining curve in which the horizontal axis indicates the shear rate and the vertical axis indicates the viscosity, and the viscosity decreases as the shear rate increases. The viscosity curve has a unique shape depending on the molecular weight, molecular weight distribution, melting point, enthalpy of fusion, and the like of the resin component. Not only when the types of the propylene-based resin, the rubber material, the elastomer, and the like are different, but also when the physical properties such as the molecular weight distribution and the melting point are different even with the same propylene-based resin, the viscosity curves assume a different shape. Due to the difference in the viscosity curve, the gradient of the viscosity curve, the range of viscosity at a high shear rate or a low shear rate, and the like, are different. In the present embodiment, the viscosity of the resin composition at each shear rate is adjusted to a predetermined range by mixing a propylene-based resin, rubber material, and elastomer having different viscosity curves.

When the viscosity of the resin composition at a high shear rate is less than 200 Pa·s, the molten resin composition may not maintain its shape when extruded, and may not be molded as an insulating layer. On the other hand, when the viscosity at a high shear rate exceeds 5000 Pa·s, the pressure at the time of extruding the resin composition becomes high, and the extrusion amount is not stable, so that the resin composition may not be extruded with a uniform thickness in some cases. In this regard, by adjusting the viscosity at a high shear rate within the range of 200 Pa·s to 5000 Pa·s, the molten resin composition can be extruded with a uniform thickness while maintaining its shape. The viscosity at a high shear rate may be 800 Pa·s to 3000 Pa·s.

When the viscosity at a low shear rate is less than 7000 Pa·s, the extruded resin composition easily sags due to its own weight, so that the thickness of the insulating layer becomes non-uniform, and the outer diameter of the power cable also becomes non-uniform. On the other hand, when the viscosity at a low shear rate exceeds 50000 Pa·s, the viscosity at a high shear rate also increases accordingly, and therefore, as described above, the extrusion amount of the resin composition becomes unstable, and the insulating layer may not be formed with a uniform thickness. In this regard, by adjusting the viscosity at a low shear rate within the range of 7000 Pa·s to 50000 Pa·s, the extruded resin composition can be prevented from sagging, and the uniformity of the outer diameter of the power cable can be enhanced. The viscosity at a low shear rate may be 10000 Pa·s to 30000 Pa·s.

The ratio of the viscosity at the high shear rate to the viscosity at the low shear rate is not particularly limited, but B/A may be 10 or more and 250 or less when the viscosity at the high shear rate is A and the viscosity at the low shear rate is B. As the ratio increases, the molten resin composition can be extruded at a lower pressure, and the shape of the resin composition after extrusion can be further maintained.

The viscosities at the high shear rate and the low shear rate were measured according to the procedure described in examples below.

### (1-5) Elastic Modulus of Resin Composition

The resin composition is formed by mixing the above-described propylene-based resin and at least one selected from the group of a rubber material and an elastomer, and is configured such that the elastic modulus of the resin composition becomes 150 MPa or more and 700 MPa or less by mixing these components. The propylene-based resin, the rubber material, and the elastomer have different elastic moduli, and the elastic modulus of the resin composition vary depending on the blending amounts thereof. Therefore, the elastic modulus of the resin composition serves an index of the ratio (make-up) of each component. In this regard, in the resin composition, when the viscosity at each shear rate falls within the above-described range and the elastic modulus falls within the above-described range, it is possible to satisfy various characteristics required for the cable such as the insulation properties as well as the uniformity of the outer diameter in the insulating layer.

### (1-6) Melting Point and Enthalpy of Fusion of Resin Composition

The melting point and the enthalpy of fusion of a resin composition vary depending on the blending amounts of a propylene-based resin, a rubber material, and an elastomer, and thus serve as an index of the ratio (make-up) of each component.

A propylene-based resin has a relatively high melting point, whereas a rubber material and an elastomer do not have a melting point or have a low melting point if they have a melting point. The propylene-based resin has high crystallinity and a high enthalpy of fusion, whereas the rubber material and the elastomer have low crystallinity or are amorphous and have a low enthalpy of fusion. Therefore, the melting point and the enthalpy of fusion of the resin composition tend to be lower than the inherent melting point and enthalpy of fusion of the propylene-based resin.

The melting point and the enthalpy of fusion of the resin composition are not particularly limited, but may be in the following ranges, from the viewpoint of mixing each component at an appropriate ratio and setting the viscosities at a high shear rate and a low shear rate within predetermined ranges.

Specifically, the melting point of the resin composition may be 158°C or higher and 168°C or lower when homo-PP is contained as the propylene-based resin. It may be 140°C or higher and 150°C or lower when random-PP is contained as the propylene-based resin.

The enthalpy of fusion of the resin composition may be 75 J/g or more and 110 J/g or less when homo-PP is contained as the propylene-based resin. It may be 60 J/g or more and 100 J/g or less when random-PP is contained as the propylene-based resin.

By mixing the propylene-based resin, the rubber material, and the elastomer at a predetermined ratio so that at least one of the melting point and the enthalpy of fusion of the resin composition falls within the above-described range, it is possible to adjust the elastic modulus and the viscosities at the high shear rate and the low shear rate to predetermined ranges.

### (1-7) Resin Composition

The ratio (make-up) of each component contained in the resin composition is preferably appropriately adjusted according to the types of the propylene-based resin, the rubber material, and the elastomer so that the elastic modulus and the viscosities at the high shear rate and the low shear rate in the resin composition are in predetermined ranges. For example, each component is preferably mixed so that the melting point and the enthalpy of fusion of the resin composition fall within the ranges described above. Specifically, in the resin composition, the addition ratio of the propylene-based resin may be 50% by mass or more. Two or more kinds of propylene-based resins having different viscosities, melting points, enthalpies of fusion, and molecular weight distributions may be used in combination. For the rubber material and the elastomer, two or more kinds of components having different physical properties described above may be used in combination.

### (2) Power Cable

Next, a power cable of the present embodiment will be described with reference to FIG. 1. FIG. 1 is a cross-sectional view perpendicular to the axial direction of a power cable according to the present embodiment.

A power cable 10 of the present embodiment is configured as a so-called solid insulated power cable. In addition, the power cable 10 of the present embodiment is configured to be laid on land (in a pipeline), under water, or in a subaqueous area (e.g., seabed or riverbed), for example. The power cable 10 is used, for example, for alternating current.

Specifically, the power cable 10 includes, for example, a conductor 110, an inner semiconductive layer 120, an insulating layer 130, an outer semiconductive layer 140, a shielding layer 150, and a sheath 160.

### [Conductor (Conductive Unit)]

The conductor 110 is configured by twisting together a plurality of conductor core wires (conductive core wires) including, for example, pure copper, a copper alloy, aluminum, or an aluminum alloy.

### [Inner Semiconductive Layer]

The inner semiconductive layer 120 is provided so as to cover the outer periphery of the conductor 110. The inner semiconductive layer 120 has semiconductivity and is configured to limit electric field concentration on the surface side of the conductor 110. The inner semiconductive layer 120 includes, for example, at least one of ethylene-based copolymers such as an ethylene-ethyl acrylate copolymer, an ethylene-methyl acrylate copolymer, an ethylene-butyl acrylate copolymer, and an ethylene-vinyl acetate copolymer, an olefin-based elastomer, the above-described rubber material and propylene-based resin and the like, and conductive carbon black.

### [Insulating Layer]

The insulating layer 130 is provided so as to cover the outer periphery of the inner semiconductive layer 120, and is formed from the resin composition described above. The insulating layer 130 is formed by, for example, extruding the resin composition.

### [Outer Semiconductive Layer]

The outer semiconductive layer 140 is provided so as to cover the outer periphery of the insulating layer 130. The outer semiconductive layer 140 has semiconductivity and is configured to limit electric field concentration between the insulating layer 130 and the shielding layer 150. The outer semiconductive layer 140 is constituted from, for example, the same material as that of the inner semiconductive layer 120.

### [Shielding Layer]

The shielding layer 150 is provided so as to cover the outer periphery of the outer semiconductive layer 140. The shielding layer 150 is configured by, for example, winding a copper tape, or is configured as a wire shield in which a plurality of soft copper wires or the like are wound. A tape made of a rubber cloth or the like may be wound inside or outside the shielding layer 150.

### [Sheath]

The sheath 160 is provided so as to cover the outer periphery of the shielding layer 150. The sheath 160 is constituted from, for example, polyvinyl chloride or polyethylene.

If the power cable 10 of the present embodiment is an underwater cable or a subaqueous cable, it may have a water-shielding layer made of metal such as a so-called aluminum cover or an iron wire armoring on the outside of the shielding layer 150. On the other hand, since the power cable 10 of the present embodiment has the above-described water tree suppressing effect, for example, it is not necessary to have a water-shielding layer made of metal such as a so-called aluminum cover on the outside of the shielding layer 150. That is, the power cable 10 of the present embodiment may be configured by an incompletely water-shielding structure.

### [Specific Dimensions and the like]

Although specific dimensions of the power cable 10 are not particularly limited, for example, the diameter of the conductor 110 is 5 mm or more and 60 mm or less, the thickness of the inner semiconductive layer 120 is 0.5 mm or more and 3 mm or less, the thickness of the insulating layer 130 is 3 mm or more and 35 mm or less, the thickness of the outer semiconductive layer 140 is 0.5 mm or more and 3 mm or less, the thickness of the shielding layer 150 is 0.1 mm or more and 5 mm or less, and the thickness of the sheath 160 is 1 mm or more. The outer diameter of the power cable 10 is, for example, 15 mm or more and 170 mm or less. The AC voltage applied to the power cable 10 of the present embodiment is, for example, 20 kV or more.

As described above, as the thickness of the insulating layer 130 increases, particularly as the ratio of the thickness of the insulating layer 130 to the outer diameter of the conductor 110 increases, the shape of the insulating layer 130 is more easily deformed. In this regard, according to the resin composition of the present embodiment, it is easy to limit the sagging of the insulating layer 130 and maintain the shape thereof. Therefore, even when the insulating layer 130 is formed relatively thick with respect to the outer diameter of the conductor 110 and the outer diameter of the power cable 10 is increased, it is possible to limit shape deformation of the insulating layer 130 and variation in the outer diameter. For example, the thickness of the insulating layer 130 may be 4 mm or more, and the ratio of the outer diameter of the power cable 10 to the outer diameter of the conductor 110 may be 4 or less. From the viewpoint of limiting variation in the outer diameter, the thickness of the insulating layer 130 may be 13 mm or less. The ratio of the outer diameter of the power cable 10 to the outer diameter of the conductor 110 may be 4 or less. The outer diameter of the conductor 110 may be in a range of 8 mm² or more and 900 mm² or less in terms of the cross-sectional area of the conductor 110.

### (3) Cable Characteristics

In the present embodiment, since the insulating layer 130 is formed from a predetermined resin composition, the following cable characteristics are secured.

### [Uniformity of Outer Diameter]

In the power cable 10 of the present embodiment, the sagging of the insulating layer 130 is limited, and thus variation in the outer diameter in each of the cross section and the longitudinal direction is small.

Small variation in the outer diameter in the cross section indicates that in the cross section perpendicular to the longitudinal direction of the power cable 10, the difference between the maximum value and the minimum value of the outer diameter in the outer peripheral direction is small. Specifically, when the major axis (maximum value of the outer diameter) in the cross section is A₁ and the minor axis (minimum value of the outer diameter) is B₁, the ratio (A₁/B₁) of the major axis to the minor axis may be 1.3 or less, or may be 1.25 or less. The lower limit of the ratio is 1.

Small variation in the outer diameter in the longitudinal direction indicates that in the cross sections at two points spaced apart in the longitudinal direction of the power cable 10, the difference in the outer diameter between the two points is small. Specifically, when the outer diameters at two points spaced apart by 5 m in the longitudinal direction are compared, and the minor axis at one of the two points is A₂ and the major axis at the other one of the two points is B₂ (A₂ < B₂), then the ratio (B₂/A₂) of the major axis B₂ at the other point to the minor axis A₂ at the one point may be 1.3 or less, or may be 1.25 or less. The lower limit of the ratio is 1.

### [Insulation Property]

In the power cable 10, when the insulating layer 130 is formed to have a predetermined designed thickness, the insulation thickness may locally decrease, and the insulation property (apparent dielectric breakdown voltage) at the predetermined thickness may not be reached. In this regard, in the present embodiment, the outer diameter of the power cable 10 can be uniformly formed, particularly, the thickness of the insulating layer 130 can be uniformly formed, and thus it is possible to more reliably secure the insulation properties at the designed thickness. Specifically, the AC breakdown electric field strength of the insulating layer 130 at ambient temperature (e.g., 27°C) is, for example, 60 kV/mm or more. More specifically, the AC breakdown electric field is 60 kV/mm or more when an AC voltage of a commercial frequency (e.g., 60 Hz) is applied to a sample having a thickness of 0.2 mm, which is taken from the insulating layer 130, in the following manner: at ambient temperature, the AC voltage is applied at 10 kV for 10 minutes, then the voltage is boosted by 1 kV and applied for 10 minutes, and this process of boosting and applying the voltage is repeated.

### (4) Method of Manufacturing Power Cable

Next, a method of manufacturing the power cable of the present embodiment will be described. Hereinafter, a "step" is abbreviated as "S".

### [S100: Resin Composition Preparation Step]

First, a resin composition for forming the insulating layer 130 is prepared.

In the present embodiment, a mixed material is formed by mixing (kneading) a propylene-based resin, at least one selected from the group of a rubber material and an elastomer, and, if necessary, other additives (such as an antioxidant) with a mixer. Examples of the mixer include an open roll mixer, a Banbury mixer, a pressure kneader, a single-shaft mixer, and a multi-shaft mixer.

At this time, in the resin composition, the propylene-based resin, the rubber material, and the elastomer are mixed at a predetermined ratio so that the viscosities at the high shear rate and the viscosity at the low shear rate are in predetermined ranges. For example, the components are preferably mixed so that the melting point, enthalpy of fusion, and the like of the resin composition are in predetermined ranges.

After the mixing material is formed, the mixing material is granulated by an extruder. Thus, a pellet-shaped resin composition as a constituent of the insulating layer 130 is formed. The steps from mixing to granulation may be collectively performed using a twin-screw extruder having a high kneading effect.

### [S200: Conductor Preparation Step]

Meanwhile, the conductor 110 formed by twisting a plurality of conductor core wires is prepared.

### [S300: Cable Core Forming Step (Extrusion Step, Insulating Layer Forming Step)]

When the resin composition preparation step S100 and the conductor preparation step S200 are completed, the above-described resin composition is extruded so as to cover the outer periphery of the conductor 110 with a thickness of 3 mm or more. At this time, since the viscosity of the resin composition at a high shear rate with a shear rate of 100 s⁻¹ at a temperature of 190°C is 200 Pa·s or more and 5000 Pa·s or less, the resin composition can be stably extruded with a constant thickness.

Subsequently, the extruded resin composition is cooled to form the insulating layer 130. At the time of cooling, since the viscosity of the resin composition at a low shear rate with a shear rate of 1 s⁻¹ at a temperature of 190°C is 7000 Pa·s or more and 50000 Pa·s or less, it is possible to limit flowing and sagging of the resin composition before the shape of the resin composition is fixed by cooling. That is, the extruded resin composition can be fixed while maintaining its shape. As a result, the insulating layer 130 can be uniformly formed in each of the outer peripheral direction of the cross section and the longitudinal direction of the power cable 10.

At this time, in the present embodiment, for example, the inner semiconductive layer 120, the insulating layer 130, and the outer semiconductive layer 140 are simultaneously formed using a three-layer co-extruder.

Specifically, for example, the composition for the inner semiconductive layer is charged into an extruder A that forms the inner semiconductive layer 120 of the three-layer co-extruder.

The above-described pellet-shaped resin composition is charged into an extruder B that forms the insulating layer 130. The set temperature of the extruder B is set to a temperature higher than the desired melting point by a temperature of 10°C or higher and 50°C or lower. The set temperature may be appropriately adjusted based on the linear velocity and the extrusion pressure.

The composition for an outer semiconductive layer containing the same material as the resin composition for an inner semiconductive layer charged into the extruder A is charged into an extruder C that forms the outer semiconductive layer 140.

Next, the extrudates from the extruders A to C are guided to a common head, and the inner semiconductive layer 120, the insulating layer 130, and the outer semiconductive layer 140 are simultaneously extruded onto the outer periphery of the conductor 110 from the inside outward. As a result, an extruded material serving as a cable core is formed.

Thereafter, the extruded material is cooled, for example, with water.

Through the above-described cable core forming step S300, the cable core including the conductor 110, the inner semiconductive layer 120, the insulating layer 130, and the outer semiconductive layer 140 is formed.

### [S400: Shielding Layer Forming Step]

After the cable core is formed, the shielding layer 150 is formed by winding a copper tape, for example, on the outside of the outer semiconductive layer 140.

### [S500: Sheath Forming Step]

After the shielding layer 150 is formed, vinyl chloride is charged into an extruder and extruded to form the sheath 160 on the outer periphery of the shielding layer 150.

As described above, the power cable 10 as the solid insulated power cable is manufactured.

### (5) Summary of Embodiment

According to the present embodiment, one or more effects described below are achieved.

(a) The resin composition of the present embodiment has a viscosity of 200 Pa·s to 5000 Pa·s at a high shear rate. Accordingly, when the resin composition is molten and extruded, the resin composition can be stably extruded with a uniform thickness while maintaining an extruded shape. The viscosity at a low shear rate is 7000 Pa·s to 50000 Pa·s. Accordingly, sagging of the extruded resin composition due to its own weight is limited until the resin composition is cooled and its shape is fixed, and the extruded shape is easily maintained. As described above, the resin composition of the present embodiment is excellent in extrusion moldability, but is unlikely to flow in a molten state and is unlikely to be deformed in shape.
(b) According to the resin composition of the present embodiment, when the insulating layer 130 of the power cable 10 is formed, the insulating layer 130 can be formed to have a uniform thickness in each of the outer peripheral direction of the cross section and the longitudinal direction of the power cable 10. As a result, variation in the outer diameter in the cross section and the longitudinal direction of the power cable 10 can be made small. Specifically, in the cross section of the power cable 10, the ratio of the maximum value (major axis) of the outer diameter to the minimum value (minor axis) of the outer diameter in the outer peripheral direction can be set to 1.3 or less. In addition, in the cross sections taken at two points spaced apart in the longitudinal direction of the power cable 10, the ratio of the major axis at one of the two points to the minor axis at the other one of the two points can be set to 1.3 or less.
(c) According to the resin composition of the present embodiment, it is configured to have the elastic modulus of 150 MPa or more and 700 MPa or less. Therefore, in the insulating layer 130, the AC breakdown electric field strength can be maintained high, and a predetermined insulation property can be ensured. Specifically, the AC breakdown electric field strength can be set to 60 kV/mm or more.
(d) Since the resin composition contains at least one selected from the group of the rubber material and the elastomer together with the propylene-based resin, excessive crystal growth of the propylene-based resin can be limited in the process of cooling the resin composition from the molten state. As a result, it is possible to obtain insulation properties and flexibility of the insulating layer 130 at a high level in a well-balanced manner.
(e) The melting point of the resin composition may be 140°C to 150°C in the case of containing random-PP, or 158°C to 168°C in the case of containing homo-PP. The enthalpy of fusion thereof may be 60 J/g to 100 J/g in the case of containing random-PP, or 75 J/g to 110 J/g in the case of containing homo-PP. In the resin composition, when at least one of the melting point and the enthalpy of fusion satisfies the predetermined range, the addition ratio of the propylene-based resin, the rubber material, and the elastomer can be set to an appropriate range, and the viscosities at the high shear rate and the low shear rate can be more reliably adjusted to the above-described ranges. Moreover, it is possible to obtain insulation properties and flexibility of the insulating layer 130 at a higher level in a well-balanced manner.
(f) In addition, according to the resin composition, even when the insulating layer 130 is formed to have a thickness of 4 mm or more and a ratio of the outer diameter of the power cable 10 to the outer diameter of the conductor 110 of 4 or less, that is, the insulating layer 130 is formed to be thicker than the outer diameter of the conductor 110, variation in the outer diameter can be limited to be small.
(g) In addition, according to the resin composition, when the power cable 10 is produced, it is possible to limit variation in the outer diameter in the longitudinal direction, which is particularly likely to occur in the case of using a vertical extruder, and variation in the outer diameter in the outer peripheral direction of the cross section, which is particularly likely to occur in the case of using a horizontal extruder.
(h) In addition, according to the resin composition, by setting the ratio of the major axis to the minor axis in the cross section of the power cable 10 to be small, for example, 1.3 or less, the uniformity of the outer diameter can be increased, and thus the processing time at the time of the connection processing of the power cable 10 can be shortened. Further, when the power cable 10 is connected to the connection member, formation of a gap at the connection portion is limited, and the connection can be performed more reliably.

### <Other Embodiments of the Present Disclosure>

An embodiment of the present disclosure has been specifically described above, but the present disclosure is not limited to the above-described embodiment, and various modifications can be made without departing from the scope of the present disclosure.

In the above-described embodiment, a case where the resin composition molded body as the insulating layer is mechanically mixed and extruded has been described, but the resin composition molded body may be polymerized and extruded.

In the above-described embodiment, a case where the power cable 10 does not need to have a water-shielding layer has been described, but the present disclosure is not limited to this. The power cable 10 may have a simple water-shielding layer by having the above-described remarkable water tree suppressing effect. Specifically, the simple water-shielding layer is constituted from, for example, a metal laminate tape. The metal laminate tape includes, for example, a metal layer constituted from aluminum, copper, or the like, and an adhesive layer provided on one surface or both surfaces of the metal layer. The metal laminate tape is, for example, longitudinally wrapped so as to surround the outer periphery of the cable core (further to the outer periphery than the outer semiconductive layer). The water-shielding layer may be provided outside the shielding layer or may also serve as the shielding layer. With such a configuration, the cost of the power cable 10 can be reduced.

In the above-described embodiment, the case where the power cable 10 is configured to be laid on land, underwater, or in a subaqueous area has been described, but the present disclosure is not limited to this. For example, the power cable 10 may be configured as a so-called overhead electrical wire (an overhead insulated electrical wire).

In the above-described embodiment, the three-layer simultaneous extrusion is performed in the cable core forming step S300, but the extrusion may be performed one layer at a time.

### [Example]

Next, examples according to the present disclosure will be described. These examples are merely examples of the present disclosure, and the present disclosure is not limited by these examples.

### (1) Materials

Materials A to E shown in Table 1 below were prepared as resin compositions for forming insulating layers. In the preparation of Materials A to E, the following components were used.

As the propylene-based resin, a plurality of different types of propylene random polymers having the ranges of a viscosity at a high shear rate of 100 Pa·s or more and 6000 Pa·s or less, a viscosity at a low shear rate of 500 Pa·s or more and 50000 Pa·s or less, a melting point of 140°C or higher and 145°C or lower, an enthalpy of fusion of 90 J/g or more and 105 J/g or less, an elastic modulus of 600 MPa or more and 1200 MPa or less, a ratio Mw/Mn of the weight average molecular weight (Mw) to the number average molecular weight (Mn) of 3.0 or more and 8.0 or less, Mn of 60000 to 150000, and Mw of 210000 to 1000000 were prepared.

As the rubber material, a plurality of different types of EPR and VLDPE having the ranges of a viscosity at a high shear rate of 500 Pa·s or more and 5000 Pa·s or less, a viscosity at a low shear rate of 10000 Pa·s or more and 70000 Pa·s or less, no melting point and no enthalpy of fusion, an elastic modulus of 1 MPa to 200 MPa, Mw/Mn of 1.0 to 3.0, Mn of 70000 to 250000, and Mw of 70000 to 600000 were prepared.

As the elastomer, a plurality of different types of styrene-based resins having the ranges of a viscosity at a high shear rate of 1000 Pa·s or more and 6000 Pa·s or less, a viscosity at a low shear rate of 5000 Pa·s or more and 50000 Pa·s or less, a melting point of 30°C or higher and 80°C or lower, an enthalpy of fusion of 5 J/g or more and 50 J/g or less, an elastic modulus of 1 MPa to 200 MPa, Mw/Mn of 1.0 to 3.0, Mn of 70000 to 250000, and Mw of 70000 to 600000 were prepared.

In this example, as the propylene-based resin, one type of resin having physical properties in the above-described ranges was used singly, or two or more types of resins were used in combination, and as the rubber material or the elastomer, one type or two or more types having physical properties in the above-described ranges were used. Then, Materials A to E shown in Table 1 were prepared by appropriately changing the ratio of each component so that each viscosity of the obtained resin composition had a predetermined value. Here, the addition ratio of the propylene-based resin was adjusted to 50% by mass or more of the resin composition. Material E was prepared by further adding 5 parts by mass of an inorganic filler to 100 parts by mass of the resin component.

**[Table 1]**

| | | | | | | |
|---|---|---|---|---|---|---|
| Resin composition | Type | Material A | Material B | Material C | Material D | Material E |
| | Melting point [°C] | 144 | 145 | 145 | 148 | 145 |
| | Enthalpy of fusion [J/g] | 73 | 78 | 51 | 95 | 72 |
| | Viscosity at high shear rate (A) [Pa·s] | 1500 | 1000 | 6000 | 100 | 4000 |
| | Viscosity at low shear rate (B) [Pa·s] | 20000 | 5000 | 42000 | 800 | 62000 |
| | Elastic modulus [MPa] | 300 | 350 | 250 | 550 | 300 |
| | (B)/(A) | 13.3 | 5.0 | 7.0 | 8.0 | 15.5 |

In Table 1, the melting point, the enthalpy of fusion, the viscosity at a high shear rate, the viscosity at a low shear rate, and the elastic modulus of each of Materials A to E were measured as follows.

### [Melting Point and Enthalpy of Fusion]

The melting points and enthalpies of fusion of Materials A to E were determined by DSC measurement. The DSC measurement was performed in accordance with JIS-K-7121 (1987). Specifically, DSC 8500 (input compensation type; manufactured by PerkinElmer) was used as a DSC apparatus. The reference sample was, for example, α-alumina. The mass of the measurement sample was 8 to 10 g. In the DSC apparatus, the temperature was raised from room temperature (27°C) to 220°C at 10°C/min. Thus, a DSC curve was obtained by plotting the endothermic heat amount (heat flow) per unit time with respect to temperature.

At this time, the temperature at which the endothermic heat amount per unit time in each measurement sample was the maximum (the highest peak) was defined as the "melting point". At this time, in the DSC curve, the area of the region surrounded by the melting peak and the baseline was obtained to determine the "enthalpy of fusion".

### [Viscosity]

The viscosity of Materials A to E at each shear rate was measured using a rotary rheometer ("MCR 302" manufactured by Anton Paar) at 190°C using a jig PP-12 while changing the shear rate from 0.001 s⁻¹ to 1000 s⁻¹.

### [Elastic Modulus]

The elastic moduli of Materials A to E were measured by dynamic mechanical analysis (DMA). Specifically, first, a press sheet for evaluation was prepared from each material. The storage elastic modulus of the press sheet was measured while heating the press sheet from -50°C to 100°C in a state in which expansion and contraction of 0.08% was applied to the press sheet. The measurement frequency was 10 Hz. The rate of temperature increase was 10°C/min. As a result of the measurement, the storage elastic modulus at 25°C was obtained.

### (2) Production of Power Cable Samples

In this example, samples simulating a power cable were produced using Materials A to E as a resin composition for forming an insulating layer.

### [Sample 1]

Specifically, as shown in Table 2 below, first, a conductor having a cross-sectional area of 2500 mm² (a conductor diameter of about 56.4 mm) was prepared. After the conductor was prepared, the resin composition for an inner semiconductive layer containing an ethylene-ethyl acrylate copolymer, the above-described Material A as a resin composition for forming an insulating layer, and the resin composition for an outer semiconductive layer constituted from the same material as the resin composition for an inner semiconductive layer were introduced into extruders A to C, respectively. The extrudates from the extruders A to C were guided to the common head, and the inner semiconductive layer, the insulating layer, and the outer semiconductive layer were simultaneously extruded onto the outer periphery of the conductor from the inside outward. At this time, the thicknesses of the inner semiconductive layer, the insulating layer, and the outer semiconductive layer were 1.0 mm, 24 mm, and 1.0 mm, respectively, and the insulating coating thickness was 26 mm. As a result, Sample 1 (with a cable outer diameter of 108.4 mm) of the power cable having a conductor, an inner semiconductive layer, an insulating layer, and an outer semiconductive layer from the center toward the outer periphery was manufactured. When the conductor diameter was X and the outer diameter of the power cable (cable outer diameter) was Y, the ratio (Y/X) of the cable outer diameter to the conductor diameter was 1.9.

In addition, the resin composition for forming the insulating layer was changed from Material A to Material B, and a power cable was produced with the same cable configuration.

### [Samples 2 to 11]

In Samples 2 to 11, as shown in Table 2 below, power cables were produced in the same manner as in Sample 1 except that Material A or Material B was used as the resin composition for forming the insulating layer and the conductor diameter and the insulating coating thickness were changed, and Samples 2 to 11 were obtained. In each sample, the thicknesses of the inner semiconductive layer and the outer semiconductive layer were the same, and the insulating coating thickness was appropriately changed by adjusting the thickness of the insulating layer.

**[Table 2]**

| | | Sample | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Cable configuration | Cross-sectional area of conductor [mm²] | 2500 | 200 | 200 | 200 | 22 | 22 | 22 | 8 | 8 | 8 | 8 |
| | Conductor diameter (X) [mm] | 56.4 | 16.0 | 16.0 | 16.0 | 5.3 | 5.3 | 5.3 | 3.2 | 3.2 | 3.2 | 3.2 |
| | Insulating coating thickness [mm] | 26 | 3 | 5 | 15 | 7 | 8 | 10 | 2 | 4 | 5 | 10 |
| | Cable outer diameter (Y) [mm] | 108.4 | 22.0 | 26.0 | 46.0 | 19.3 | 21.3 | 25.3 | 7.2 | 11.2 | 13.2 | 23.2 |
| | Y/X | 1.9 | 1.4 | 1.6 | 2.9 | 3.6 | 4.0 | 4.8 | 2.3 | 3.5 | 4.1 | 7.3 |
| Uniformity of outer diameter in cross section | Material A | 1.05 | 1.01 | 1.04 | 1.1 | 1.15 | 1.3 | 1.42 | 1.05 | 1.15 | 1.33 | 1.6 |
| | Material B | 1.31 | 1.02 | 1.32 | 2.4 | 1.65 | 2.2 | 2.6 | 1.08 | 1.6 | 2.2 | 3.1 |
| Uniformity of outer diameter in longitudinal direction | Material A | 1.1 | 1.06 | 1.09 | 1.15 | 1.2 | 1.55 | 1.67 | 1.1 | 1.2 | 1.58 | 1.85 |
| | Material B | 1.56 | 1.07 | 1.57 | 2.65 | 1.9 | 2.45 | 2.85 | 1.13 | 1.85 | 2.45 | 3.35 |

### [Samples 12 to 14]

In Samples 12 to 14, as shown in Table 3 below, power cables were produced in the same manner as in Sample 1 except that Materials C to E were used as the resin composition for forming the insulating layer and the conductor diameter and the insulating coating thickness were appropriately changed.

**[Table 3]**

| | | Sample | | |
|---|---|---|---|---|
| | | 12 | 13 | 14 |
| Cable configuration | Resin composition for forming insulating layer | Material C | Material D | Material E |
| | Cross-sectional area of conductor [mm²] | 2500 | 200 | 200 |
| | Conductor diameter (X) [mm] | 56.4 | 16.0 | 16.0 |
| | Insulating coating thickness [mm] | 26 | 3 | 5 |
| | Cable outer diameter (Y) [mm] | 108.4 | 22.0 | 26.0 |
| | Y/X | 1.9 | 1.4 | 1.6 |
| Evaluation | Uniformity of outer diameter in cross section | Could not be molded | Could not be molded | 1.1 |
| | Uniformity of outer diameter in longitudinal direction | Could not be molded | Could not be molded | 1.45 |

### (3) Evaluation

Samples 1 to 14 produced as power cables were evaluated for the uniformity of the outer diameter in the cross section of the power cable, the uniformity of the outer diameter in the longitudinal direction, and the insulation properties.

The uniformity of the outer diameter in the cross section was evaluated as follows. Specifically, any one point in the longitudinal direction in the power cable was selected, the outer diameter in the outer peripheral direction in the cross section was measured, the major axis (maximum value) and the minor axis (minimum value) were obtained, and the ratio of the major axis to the minor axis was calculated. The smaller ratio indicates the smaller variation in the outer diameter in the cross section.

The uniformity of the outer diameter in the longitudinal direction was evaluated as follows. Specifically, two points separated by 5 m in the longitudinal direction of the power cable were selected, the major axis and the minor axis at each point were measured, and the ratio of the major axis at one of the two points to the minor axis at the other one of the two points was calculated. The smaller ratio indicates the smaller variation in the outer diameter in the longitudinal direction.

The insulation properties were evaluated by an AC breakdown test. Specifically, a measurement sample having a thickness of 0.2 mm was cut out from the insulating layer of the produced sample. Thereafter, at ambient temperature (27°C), an AC voltage of a commercial frequency (e.g., 60 Hz) was applied to the measurement sample having a thickness of 0.2 mm in the following manner: the AC voltage was applied at 10 kV for 10 minutes, then the voltage was boosted by 1 kV and applied for 10 minutes, and this process of boosting and applying the voltage was repeated. The electric field strength at the time of dielectric breakdown of the inner sample was measured. As a result, the case where the AC breakdown strength was 60 kV/mm or more was evaluated as good.

### (4) Evaluation Results

The evaluation results are summarized in Tables 2 and 3.

As shown in Table 2, in Samples 1 to 11, it was confirmed that when Material A was used as the resin composition for forming the insulating layer, variation in the outer diameter in each of the cross section and the longitudinal direction tended to be smaller than that in the case where Material B was used. This is because Material B is more likely to sag than Material A and cannot maintain its shape.

Specifically, as shown in Table 1, since the viscosity of Material B at a high shear rate was 1000 Pa·s and was in the range of 200 Pa·s to 5000 Pa·s, it was confirmed that the resin composition could be stably extruded with a constant thickness. On the other hand, since the viscosity at a low shear rate is 5000 Pa·s and less than 7000 Pa·s, Material B easily flows and sags after extrusion before the shape is fixed by cooling. Therefore, in the case of using Material B, it is presumed that the insulating layer is deformed before the shape is fixed, and the outer diameter of the power cable is varied accordingly. In Material B, as shown in Samples 2 and 8, when the insulating coating thickness is small or the ratio (Y/X) of the cable outer diameter Y to the conductor diameter X is small, variation in the outer diameter can be limited, but as shown in Samples 1, 3 to 7, and 9 to 11, it was confirmed that when the insulating coating thickness becomes 4 mm or more or Y/X becomes large, variation in the outer diameter becomes larger.

On the other hand, Material A has a small viscosity at a high shear rate and is excellent in extrusion moldability, and also has a large viscosity at a low shear rate as compared with Material B and is unlikely to flow in a molten state. Therefore, Material A can limit variation in the outer diameter as compared with Material B.

In addition, as shown in Samples 2, 8, and 9, it was confirmed that when the insulating coating thickness was reduced, variation in the outer diameter was unlikely to occur. As shown in Samples 7, 10, and 11, it was confirmed that when the power cable was produced so that the ratio of the cable outer diameter to the conductor diameter was excessively high, variation in the outer diameter was likely to occur. Further, as shown in Samples 1 and 3 to 6, according to Material A, it was confirmed that when the insulating layer thickness was set to 4 mm or more and the ratio of the cable outer diameter to the conductor diameter was set to 4 or less, variation in the outer diameter could be limited to 1.3 or less in terms of the ratio.

Further, as shown in Sample 12, it was confirmed that since the viscosity of Material C at a high shear rate was excessively high, Material C was poor in extrusion moldability and could not be molded as an insulating layer. On the other hand, as shown in Sample 13, it was confirmed that since the viscosity of Material D was excessively low at both the high shear rate and the low shear rate, Material D was not extruded in a stable shape, and could not be molded as an insulating layer because the extruded shape could not be maintained.

In addition, as shown in Sample 14, it was confirmed that since the material E had a high viscosity at both the high shear rate and the low shear rate by containing the inorganic filler, the extrudability of the resin composition was not stabilized, and variation in the outer diameter particularly in the longitudinal direction became large.

In addition, it was confirmed that, among Samples 1 to 14, when the uniformity of the outer diameter in the cross section and the longitudinal direction was high and the ratio of variation in the outer diameter was 1.3 or less, the AC breakdown strength was 60 kV/mm or more, and high insulation properties were more reliably obtained.

<Supplementary Descriptions>

Hereinafter, modes of the present disclosure will be supplementary described.

### (Supplementary description 1)

A resin composition including
a propylene-based resin, and
at least one selected from the group of a rubber material and an elastomer,
wherein the rubber material and the elastomer each includes at least two units from among ethylene, propylene, butylene, hexene, isoprene, octene, and styrene,
the resin composition has a viscosity of 200 Pa·s or more and 5000 Pa·s or less at a high shear rate with a shear rate of 100 s⁻¹ at a temperature of 190°C, and a viscosity of 7000 Pa·s or more and 50000 Pa·s or less at a low shear rate with a shear rate of 1 s⁻¹ at a temperature of 190°C, and
the resin composition has an elastic modulus of 150 MPa or more and 700 MPa or less.

### (Supplementary description 2)

A power cable including
a conductor and
an insulating layer coated on an outer periphery of the conductor and formed from a resin composition,
the resin composition including
a propylene-based resin and
at least one selected from the group of a rubber material and an elastomer,
the rubber material and the elastomer each including at least two units from among ethylene, propylene, butylene, hexene, isoprene, octene, and styrene,
the resin composition having a viscosity of 200 Pa·s or more and 5000 Pa·s or less at a high shear rate with a shear rate of 100 s⁻¹ at a temperature of 190°C, and a viscosity of 7000 Pa·s or more and 50000 Pa·s or less at a low shear rate with a shear rate of 1 s⁻¹ at a temperature of 190°C,
the resin composition having an elastic modulus of 150 MPa or more and 700 MPa or less.

### (Supplementary description 3)

The power cable according to the supplementary description 2,
wherein the enthalpy of fusion of the resin composition is 60 J/g or more and 100 J/g or less.

### (Supplementary description 4)

The power cable according to the supplementary description 2 or 3,
wherein the melting point of the resin composition is 140°C or higher and 150°C or lower.

### (Supplementary description 5)

The power cable according to any one of the supplementary descriptions 2 to 4,
wherein in a cross section of the power cable perpendicular to a longitudinal direction of the power cable, a ratio of the major axis to the minor axis is 1.3 or less.

### (Supplementary description 6)

The power cable according to any one of the supplementary descriptions 2 to 5,
wherein in cross sections of the power cable taken at two points spaced apart in a longitudinal direction of the power cable, a ratio of the major axis at one of the two points to the minor axis at the other one of the two points is 1.3 or less.

### (Supplementary description 7)

The power cable according to any one of the supplementary descriptions 2 to 6,
wherein the thickness of the insulating layer is 4 mm or more, and a ratio of the outer diameter of the power cable to the outer diameter of the conductor is 4 or less.

### (Supplementary description 8)

The power cable according to any one of the supplementary descriptions 2 to 7,
wherein the propylene-based resin has an elastic modulus of 600 MPa or more and 1200 MPa or less.

### (Supplementary description 9)

The power cable according to any one of the supplementary descriptions 2 to 8,
wherein the propylene-based resin has a viscosity of 100 Pa·s or more and 6000 Pa·s or less at the high shear rate, and a viscosity of 500 Pa·s to 50000 Pa·s or less at the low shear rate.

### (Supplementary description 10)

The power cable according to any one of the supplementary descriptions 2 to 9,
wherein the propylene-based resin has a melting point of 140°C or higher and 150°C or lower, and an enthalpy of fusion of 90 J/g or more and 105 J/g or less.

### (Supplementary description 11)

The power cable according to any one of the supplementary descriptions 2 to 10,
wherein the propylene-based resin has a ratio Mw/Mn of 3.0 or more and 8.0 or less, where Mw is the weight average molecular weight and Mn is the number average molecular weight in the molecular weight distribution.

### (Supplementary description 12)

The power cable according to any one of the supplementary descriptions 2 to 11,
wherein the rubber material and the elastomer each has a viscosity of 300 Pa·s or more and 7000 Pa·s or less at the high shear rate, and a viscosity of 4000 Pa·s or more and 80000 Pa·s or less at the low shear rate.

### (Supplementary description 13)

The power cable according to any one of the supplementary descriptions 2 to 12,
wherein the rubber material and the elastomer each has a viscosity of 1 MPa or more and 200 MPa or less.

### (Supplementary description 14)

The power cable according to any one of the supplementary descriptions 2 to 13,
wherein the rubber material does not have a melting point, or has a melting point of 100°C or lower.

### (Supplementary description 15)

The power cable according to any one of the supplementary descriptions 2 to 14,
wherein the rubber material has the enthalpy of fusion of 50 J/g or less.

### (Supplementary description 16)

The power cable according to any one of the supplementary descriptions 2 to 15,
wherein the rubber material and the elastomer each has a ratio Mw/Mn of 1.0 or more and 3.0 or less, where Mw is the weight average molecular weight and Mn is the number average molecular weight in the molecular weight distribution.

### [Reference Signs List]

- 10: Power cable
- 110: Conductor
- 120: Inner semiconductive layer
- 130: Insulating layer
- 140: Outer semiconductive layer
- 150: Shielding layer
- 160: Sheath

## Claims

1. A resin composition comprising
a propylene-based resin, and
at least one selected from the group of a rubber material and an elastomer,
wherein the rubber material and the elastomer each includes at least two units from among ethylene, propylene, butylene, hexene, isoprene, octene, and styrene,
the resin composition has a viscosity of 200 Pa·s or more and 5000 Pa·s or less at a high shear rate with a shear rate of 100 s⁻¹ at a temperature of 190°C, and a viscosity of 7000 Pa·s or more and 50000 Pa·s or less at a low shear rate with a shear rate of 1 s⁻¹ at a temperature of 190°C, and
the resin composition has an elastic modulus of 150 MPa or more and 700 MPa or less.

2. A power cable comprising
a conductor and
an insulating layer coated on an outer periphery of the conductor and formed from a resin composition,
the resin composition including
a propylene-based resin and
at least one selected from the group of a rubber material and an elastomer,
the rubber material and the elastomer each including at least two units from among ethylene, propylene, butylene, hexene, isoprene, octene, and styrene,
the resin composition having a viscosity of 200 Pa·s or more and 5000 Pa·s or less at a high shear rate with a shear rate of 100 s⁻¹ at a temperature of 190°C, and a viscosity of 7000 Pa·s or more and 50000 Pa·s or less at a low shear rate with a shear rate of 1 s⁻¹ at a temperature of 190°C,
the resin composition having an elastic modulus of 150 MPa or more and 700 MPa or less.

3. The power cable according to claim 2,
wherein the enthalpy of fusion of the resin composition is 60 J/g or more and 100 J/g or less.

4. The power cable according to claim 2 or 3,
wherein the melting point of the resin composition is 140°C or higher and 150°C or lower.

5. The power cable according to any one of claims 2 to 4,
wherein the propylene-based resin has a viscosity of 100 Pa·s or more and 6000 Pa·s or less at the high shear rate, and a viscosity of 500 Pa·s to 50000 Pa·s or less at the low shear rate.

6. The power cable according to any one of claims 2 to 5,
wherein the rubber material and the elastomer each has a viscosity of 300 Pa·s or more and 7000 Pa·s or less at the high shear rate, and a viscosity of 4000 Pa·s or more and 80000 Pa·s or less at the low shear rate.

7. The power cable according to any one of claims 2 to 6,
wherein in a cross section of the power cable perpendicular to a longitudinal direction of the power cable, a ratio of the major axis to the minor axis is 1.3 or less.

8. The power cable according to any one of claims 2 to 7,
wherein in cross sections of the power cable taken at two points spaced apart in a longitudinal direction of the power cable, a ratio of the major axis at one of the two points to the minor axis at the other one of the two points is 1.3 or less.

9. The power cable according to any one of claims 2 to 8,
wherein the thickness of the insulating layer is 4 mm or more, and a ratio of the outer diameter of the power cable to the outer diameter of the conductor is 4 or less.
